# EUROPÄISCHE PATENTSCHRIFT

(11) **EP 2 466 163 B1**
(45) Veröffentlichungstag und Bekanntmachung des Hinweises auf die Patenterteilung: **10.02.2016**
(21) Anmeldenummer: 11188748.5
(22) Anmeldetag: 11.11.2011
(51) Int. Cl.: F16D 41/10, F16D 43/02, E05F 11/50

(54) **Lastdrehmomentsperre für eine Getriebe-Antriebseinheit und Aggregat mit einer Lastdrehmomentsperre**
Load torsional block for a gear drive unit and device with the same
Système de blocage de couple de charge pour une unité d'entraînement d'engrenage et agrégat doté d'un système de blocage de couple de charge

(30) Priorität: 16.12.2010 DE 102010063238
(43) Veröffentlichungstag der Anmeldung: 20.06.2012
(73) Patentinhaber: Robert Bosch GmbH, 70442 Stuttgart (DE)
(72) Erfinder: Schindler, Kurt, 77855 Achern-Oensbach (DE)

(56) Entgegenhaltungen:
- EP-A1- 0 012 250
- DE-A1-102006 012 954
- US-A- 2 447 167
- US-A- 4 373 925
- US-A- 4 646 888

## Beschreibung

### Stand der Technik

Die Erfindung betrifft eine Lastdrehmomentsperre für eine Getriebe-Antriebseinheit nach dem Oberbegriff der beiden unabhängigen Ansprüche 1 und 3. Ferner betrifft die Erfindung ein Aggregat mit einer erfindungsgemäßen Lastdrehmomentsperre.

Eine Lastdrehmomentsperre nach dem Oberbegriff der Ansprüche 1 und 3 ist aus der EP 0 012 250 A1 der Anmelderin sowie der US 4 646 888 A bekannt. In beiden dient ein als Schlingfeder ausgebildetes Bremselement dazu, die Einleitung eines abtriebsseitigen Drehmoments in die Getriebe-Antriebseinheit zu vermeiden. Dadurch lassen sich insbesondere ungewollte Bewegungen eines mit der Getriebe-Antriebseinheit verbundenen, zu verstellenden Elements vermeiden. Eine derartige, aus Metall bestehende Schlingfeder besteht aus mehreren, konzentrisch zu einer Längsachse der Schlingfeder verlaufenden Windungen, wobei die Federenden radial abgewinkelt sind und mit Mitnehmelementen der Getriebe-Antriebseinheit zusammenwirken.

Darüber hinaus ist aus der DE 10 2005 012 938 A1 eine Getriebe-Antriebseinheit mit einer Lastdrehmomentsperre bekannt, die in einem Fensterheberantrieb eingesetzt ist, um ein von einem Abtriebselement, insbesondere über eine Fensterscheibe, in Richtung eines Antriebselements eingeleitetes Drehmoment zu sperren. Damit soll eine unbeabsichtigte bzw. ungewünschte Bewegung des Abtriebselements bzw. des Fensters vermieden werden. Die bekannte Lastdrehmomentsperre weist ebenfalls eine Schlingfeder auf, die konzentrisch um ein ortsfestes Gehäuseelement in Form einer Welle angeordnet ist, und die sowohl in Wirkverbindung mit Mitnehmern eines Abtriebselements, als auch in Wirkverbindung mit einem Antriebselement angeordnet ist. Beim Einleiten eines antriebsseitigen Drehmoments wird dabei der Durchmesser der Schlingfedern aufgeweitet, so dass ein Antriebsdrehmoment an das Abtriebselement weitergegeben werden kann. Beim Einleiten eines Drehmoments von dem Abtriebselement, unabhängig von dessen Drehrichtung, werden hingegen die beiden Federenden der Schlingfeder derart gegenseitig verdreht, dass sich der Durchmesser der Schlingfeder verringert, wodurch diese an der angesprochenen Welle reibschlüssig anliegt und damit das Abtriebselement sowie das Antriebselement am Drehen hindert.

Zumindest bei der zuletzt genannten Lastdrehmomentsperre ist es bauartbedingt lediglich möglich, die Schlingfeder über zwei Mitnehmer des Abtriebselements zu koppeln. Daher ist das zu übertragende bzw. zu sperrende Drehmoment beschränkt. Es sind zwar diverse Möglichkeiten zur Erhöhung des zu übertragenden Drehmoments denkbar, beispielsweise eine Verbreitung der Mitnehmer, die Ausbildung der Mitnehmer aus einem steiferen Material, zusätzliche Schutzabdeckungen an die Mitnehmern oder dgl., die ein eingeleitetes Drehmoment beispielsweise gleichmäßig über die Mitnehmer verteilen, diese Maßnahmen bedeuten jedoch einen konstruktiv erhöhten Aufwand für die Lastdrehmomentsperre.

### Offenbarung der Erfindung

Ausgehend von dem dargestellten Stand der Technik liegt der Erfindung die Aufgabe zugrunde, eine Lastdrehmomentsperre für eine Getriebe-Antriebseinheit nach dem Oberbegriff der Ansprüche 1 und 3 derart weiterzubilden, dass sie bei alternativem, konstruktiv relativ einfachem Aufbau eine sichere Sperrung abtriebsseitig eingeleiteter Drehmomente ermöglicht. Diese Aufgabe wird bei einer Lastdrehmomentsperre für eine Getriebe-Antriebseinheit mit den Merkmalen der Ansprüche 1 und 3 gelöst. Der Erfindung liegt dabei die Idee zugrunde, anstelle einer Schlingfeder, wie sie aus dem Stand der Technik bekannt ist, und die als Bremskörper wirkt, den Bremskörper als Klemmring mit einer speziellen Kontur seiner Klemmflächen auszubilden. Durch die erfindungsgemäßen ebenen Klemmflächen bzw. linienförmigen Klemmflächen mit einem Überlaufschutz lässt sich dabei die oben genannte Aufgabe lösen. Dabei lassen sich bei der Verwendung ebener Klemmflächen insbesondere relativ geringe Flächenpressungen und somit eine relativ geringe mechanische Beanspruchung der Bauteile erzielen, während die Verwendung der linienförmigen Klemmflächen mit dem Überlaufschutz trotz (im Verhältnis zu den ebenen Klemmflächen) erhöhter Flächenpressungen ein besonders sicheres Sperren abtriebsseitig eingeleiteter Drehmomente durch den Überlaufschutz ermöglicht.

Vorteilhafte Weiterbildungen der erfindungsgemäßen Lastdrehmomentsperre für eine Getriebeantriebseinheit sind in den jeweiligen Unteransprüchen angegeben.

In einer besonders bevorzugten konstruktiven Umsetzung, die die Übertragung von relativ hohen Antriebs- bzw. Sperrelementen ermöglicht, ohne dass dabei besonders hohe Anforderungen an das Material der Lastdrehmomentsperre gestellt werden, ist es vorgesehen, dass mehrere, vorzugsweise wenigstens drei, in gleichmäßigen Winkelabständen zueinander angeordnete Mitnehmer am Antriebselement vorgesehen sind, die mit Fortsätzen des Abtriebselements zusammenwirken, wobei zwischen dem Klemmring und dem Mitnehmer ein Radialspalt ausgebildet ist. Der Radialspalt dient als Ausgleichsbereich für das Verringern des Durchmessers des Klemmrings im Bereich der reibschlüssigen Verbindung, so dass sich der Klemmring außerhalb der reibschlüssigen Verbindung im Durchmesser vergrößert.

Hierbei kann es in einer weiteren Ausgestaltung der Erfindung vorgesehen sein, dass die ebenen Klemmflächen jeweils aus wenigstens zwei Klemmflächen bestehen, die in einem Winkel zueinander angeordnet sind.

Ein besonders sicheres bzw. schnelles Ansprechen der Lastdrehmomentsperre beim Einleiten abtriebsseitiger Drehmomente wird erzielt, wenn zwischen dem ortsfesten Element und dem Klemmring eine reibschlüssige Verbindung ausgebildet ist. Dadurch gelangen die Kontaktflächen des Abtriebselements bereits bei einem sehr geringen Verdrehwinkel gegenüber dem Antriebselement in Wirkverbindung mit dem Klemmring.

Eine besonders einfache und kostengünstige Möglichkeit zur Herstellung der angesprochenen reibschlüssigen Verbindung zwischen dem ortsfesten Element und dem Klemmring lässt sich verwirklichen, wenn die reibschlüssige Verbindung mittels eines O-Rings erfolgt.

Der Verschleiß der Lastdrehmomentsperre lässt sich darüber hinaus in einer weiteren Ausgestaltung der Erfindung verringern, wenn zwischen dem ortsfesten Element und dem Klemmring ein verschleißfestes Element in Form eines metallischen Ringes angeordnet ist, wobei der metallische Ring mit dem ortsfesten Element drehfest verbunden ist.

Die Erfindung umfasst auch ein Aggregat mit einer erfindungsgemäßen Lastdrehmomentsperre, wobei das Aggregat als Komfortantrieb in einem Kraftfahrzeug, insbesondere als Fensterheberantrieb, ausgebildet ist. Ein derartiges Aggregat ermöglicht bei relativ kompaktem Bauraum das Sperren von relativ hohen, abtriebsseitig in die Lastdrehmomentsperre eingeleiteten Drehmomenten, und ist somit auch für relativ große Fahrzeugscheiben geeignet.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen Querschnitt durch eine erfindungsgemäße Lastdrehmomentsperre für eine Getriebe-Antriebseinheit, bei der unterschiedliche Ausgestaltungen von Kontaktflächen dargestellt sind,
- Fig. 2: einen Längsschnitt durch eine gegenüber der Fig. 1 modifizierte Lastdrehmomentsperre,
- Fig. 3 bis Fig. 6: Teilquerschnitte im Bereich von Lastdrehmomentsperren bei unterschiedlichen Ausgestaltungen des Klemmrings sowie der dem Abtriebselement zugeordneten Mitnehmer und
- Fig. 7: einen Querschnitt durch eine gegenüber Fig. 1 nochmals modifizierte Lastdrehmomentsperre unter Verwendung einer Vielzahl von Mitnehmern.

Gleiche Bauteile bzw. Bauteile mit gleicher Funktion sind in den Figuren mit denselben Bezugsziffern versehen.

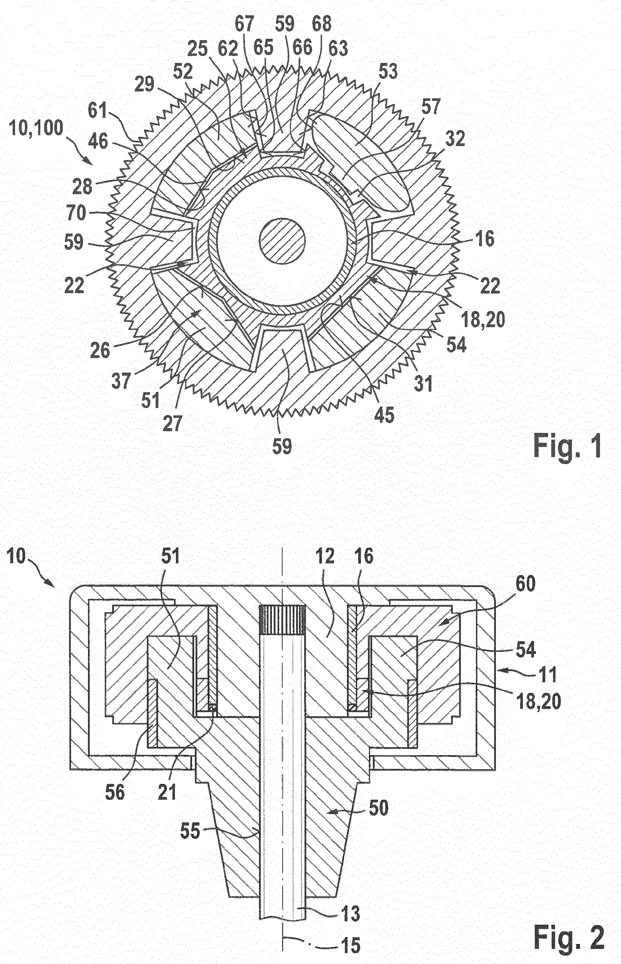

In der Fig. 1 ist eine erste erfindungsgemäße Lastdrehmomentsperre 10 für eine im Einzelnen nicht näher dargestellte Getriebe-Antriebseinheit 100 dargestellt. Eine derartige Getriebe-Antriebseinheit 100 kann dabei insbesondere Bestandteil eines Aggregats sein, das als Komfortantrieb in einem Kraftfahrzeug, insbesondere als Fensterheberantrieb, ausgebildet ist. Bezüglich einer möglichen konkreten Ausgestaltung einer derartigen Getriebe-Antriebseinheit 100 wird exemplarisch auf die DE 10 2005 012 938 A1 der Anmelderin verwiesen, die insofern Bestandteil der Anmeldung sein soll.

Die Lastdrehmomentsperre 10 weist ein hohlzylindrisches Gehäuse 11 auf, das mittels nicht dargestellter Befestigungselemente, zum Beispiel in Form von Schrauben, ortsfest in dem Kraftfahrzeug befestigt ist. Im Nabenbereich 12 des Gehäuses 11 ist ein Trägerelement in Form einer Achse 13 starr befestigt. Konzentrisch zur Längsachse 15 der Achse 13 ist der Nabenbereich 12 von einem als Verschleißschutz dienenden Stahlring 16 umgeben. Hierbei ist der Stahlring 16 mit dem Gehäuse 11 bzw. dem Nabenbereich 12 drehfest verbunden, beispielsweise durch eine Klebeverbindung, eine Schrumpfverbindung oder ähnliches.

Der Stahlring 16 ist an einem Teilbereich seiner axialen Erstreckung von einem Bremskörper 18 in Form eines elastisch deformierbaren Klemmringes 20 konzentrisch umgeben. Zwischen dem Außenumfang des Stahlrings 16 und dem Innenumfang des Klemmrings 20 kann dabei ein minimaler Radialspalt (nicht dargestellt) ausgebildet sein, der ein Drehen des Klemmrings 20 auf dem Stahlring 16 in von Radialkräften unbelastetem Zustand des Klemmrings 20 ermöglicht. Zusätzlich ist zwischen dem Nabenbereich 12 und dem Klemmring 20 eine reibschlüssige Verbindung ausgebildet, die beispielhaft mittels eines O-Rings 21 erfolgt, der nichtsdestotrotz eine Drehbewegung des Klemmrings 20 in Bezug auf den Stahlring 16 ermöglicht. Der O-Ring 21 ist lediglich optional vorgesehen für den Fall, wenn die zwischen dem Stahlring 16 und dem Klemmring 18 vorhandene Grundreibung relativ gering ist.

Wie insbesondere anhand der Fig. 1 erkennbar ist, weist der Klemmring 20 vier, in gleichmäßigen Winkelabständen zueinander angeordnete, nutförmige Aufnahmen 22 für später noch näher erläuterte Mitnehmer 59, 59a eines Antriebselements 60 auf. Zwischen den Aufnahmen 22 bildet der Klemmring 20 jeweils erste Klemmflächenbereiche 25 aus.

Der Einfachheit halber sind in der Fig. 1 in der Lastdrehmomentsperre 10 vier unterschiedlich ausgebildete erste Klemmflächenbereiche 25 dargestellt, wobei in der Praxis eine Lastdrehmomentsperre 10 jeweils vorzugsweise nur einen einzigen Typ bzw. eine einzige Art von ersten Klemmflächenbereichen 25 aufweist.

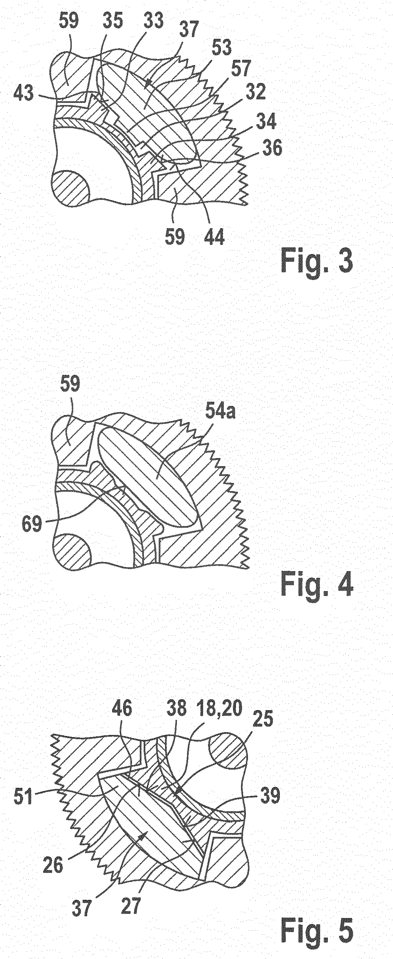

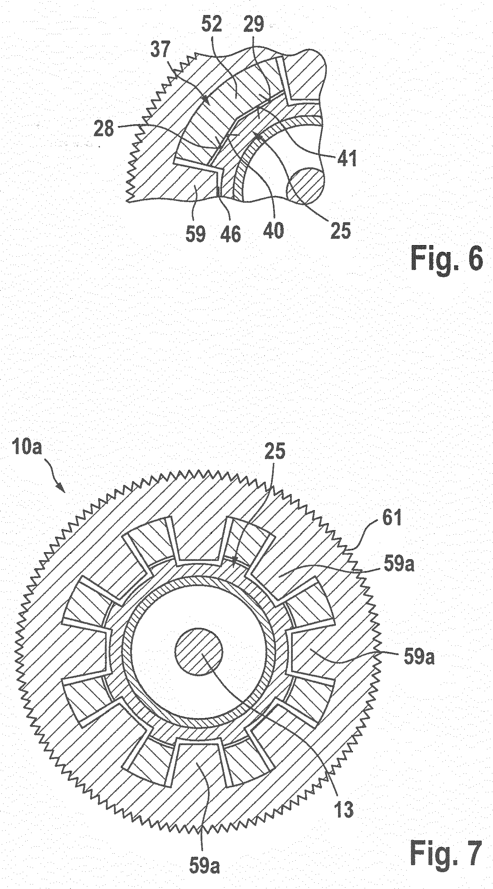

Der eine, in den Fig. 1 und 5 erkennbare erste Klemmflächenbereich 25 weist zwei jeweils ebene Klemmflächen 26, 27 am Klemmring 20 auf, die eine konkave Anordnung zueinander ausbilden. Bei einem anderen, in den Fig. 1 und 6 dargestellten ersten Klemmflächenbereich 25 sind zwei Klemmflächen 28, 29 vorgesehen, die ebenfalls als ebene Flächen ausgebildet sind, und die eine konvexe Anordnung zueinander ausbilden. Eine dritte Art des ersten Klemmflächenbereichs 25 in der Fig. 1 zeigt am Klemmring 20 nur eine einzige Klemmfläche 31, die ebenfalls eben ausgebildet ist, und die gegenüber einer gedachten Tangente an einem Teilkreis des Klemmrings 20 unter einem Winkel bzw. schräg angeordnet ist. Dadurch wirkt die Klemmfläche 31 bei einer Drehung des Klemmrings 20 als Keil.

Weiterhin ist eine in den Fig. 1 und 3 erkennbare vierte Art des ersten Klemmflächenbereichs 25 dargestellt. Hierbei ist der Bereich zwischen zwei Aufnahmen 22 mit einer nutartigen Ausnehmung 32 versehen, die beidseitig von jeweils einer Erhebung 33,34 begrenzt ist. Die einander zugewandten Seiten der Erhebungen 33, 34 bilden hierbei linienförmige Klemmflächen 35, 36 aus.

Die Klemmflächen 26 bis 29 der ersten Klemmflächenbereiche 25 wirken mit der Form bzw. Anordnung der Klemmflächen 26 bis 29 angepassten Klemmflächen 38 bis 41 an zweiten Klemmflächenbereichen 37 zusammen, die an zapfenförmigen Fortsätzen 51, 52 eines Abtriebselements 50 angeordnet sind. Die linienförmigen Klemmflächen 35, 36 wirken mit gewölbten Klemmflächen 43, 44 am zweiten Klemmflächenbereich 37 eines Fortsatzes 53 des Abtriebselements 50 zusammen. Zwischen den Klemmflächen 43, 44 weist der Fortsatz 53 darüber hinaus einen Steg 57 auf, der in die Ausnehmung 32 des Klemmrings 20 hineinragt, jedoch einen geringen radialen Abstand zu diesem aufweist. Der Steg 57 wirkt hierbei als Überlaufschutz, d.h., dass die Relativbewegung des Fortsatzes 53 zum Klemmring 20 dadurch beschränkt ist, dass der Steg 57 aufgrund der Erhebungen 33, 34 nicht außerhalb der Ausnehmung 32 gelangen kann. Zuletzt wirkt die eine Klemmfläche 31 des ersten Klemmflächenbereichs 25 mit einer Klemmfläche 45 des zweiten Klemmflächenbereichs 37 an einem Fortsatz 54 des Abtriebselements 50 zusammen.

Wesentlich ist noch, dass zwischen den Klemmflächen 26 bis 29 und 38 bis 41, sowie zwischen den Klemmflächen 35, 36 und 43, 44 und den Klemmflächen 31 und 45 in einer nicht gesperrten Position der Lastdrehmomentsperre 10 jeweils in radialer Richtung ein Spalt 46 ausgebildet ist, so dass ein gewisses Drehwinkelspiel zwischen den ersten Klemmflächenbereichen 25 und den zweiten Klemmflächenbereichen 37 erzielt wird.

Das insbesondere aus Kunststoff bestehende Abtriebselement 50 ist in einer Durchgangsbohrung 55 drehbeweglich auf der Achse 13 angeordnet. Weiterhin ist das Abtriebselement 50 auf nicht dargestellte Art und Weise (bei Verwendung als Fensterheberantrieb), zum Beispiel über eine Außenverzahnung, mit einem Mechanismus zum Anheben bzw. Absenken eines Fensters in einem Kraftfahrzeug gekoppelt, so dass eine Drehbewegung des Abtriebselements 50 in einem Heben oder Senken der Fahrzeugscheibe resultiert.

Entsprechend der Fig. 2 können die Fortsätze 51 bis 54 an ihrem Außenumfang von einem beispielhaft als Stahlring 56 ausgebildeten Verstärkungselement umfasst sein, der bzw. das eine radiale Ausdehnung der Fortsätze 51 bis 54 bei Kraftbeanspruchung verhindert. Wesentlich ist auch, dass die den Aufnahmen 22 zugewandten Stirnseiten der vier Fortsätze 51 bis 54 des Abtriebselements 50 mit den Begrenzungen der Aufnahmen 22 bündig verlaufen, d.h., dass der Winkelbereich der Fortsätze 51 bis 54 dem Winkelbereich der ersten Klemmflächenbereiche 25 am Klemmring 20 entspricht.

In die Ausnehmungen 22 sowie zwischen die Fortsätze 51 bis 54 ragen insgesamt vier Mitnehmer 59 eines Antriebselements 60 hinein. Das Antriebselement 60 ist hierbei insbesondere als Zahnrad ausgebildet und wirkt mit einem nicht dargestellten Antrieb, z.B. mit einer Antriebsschnecke, zusammen, die von einem als Elektromotor ausgebildeten Antrieb gedreht wird. Die Antriebsschnecke kämmt dabei mit einer Außenverzahnung 61 am Antriebselement 50.

Die Funktionsweise der soweit beschriebenen Lastdrehmomentsperre 10 ist wie folgt: Beim Einleiten eines Drehmoments von dem Antriebselement 60 über die vier Mitnehmer 59 im Uhrzeiger- oder Gegenuhrzeigersinn werden die Fortsätze 51 bis 54 des Abtriebselements 50 über die stirnseitigen Flächen 62, 63 der Mitnehmer 59 mitgenommen, die an den stirnseitigen Flächen 67, 68 der Fortsätze 51 bis 54 anliegen. Weiterhin nehmen die stirnseitigen Flächen 62, 63 der Mitnehmer 59 den Klemmring 20 an dessen stirnseitigen Flächen 65, 66 in den Aufnahmen 22 mit. Es wird somit in beide Drehrichtungen des Antriebselements 60 die Übertragung eines Drehmoments vom Antriebselement 60 auf das Abtriebselement 50 ermöglicht.

Wird demgegenüber über die Fortsätze 51 bis 54 des Abtriebselements 50 ein abtriebsseitiges Drehmoment in die Lastdrehmomentsperre 10 eingeleitet, so gelangen, in Abhängigkeit der Drehrichtung des vom Abtriebselement 50 eingeleiteten Drehmoments, die jeweils gegenüberliegenden Klemmflächen 26, 38 oder 27, 39 oder 28,40 oder 29, 41 oder 35, 43 oder 36, 44 oder 31, 45 der Fortsätze 51 bis 54 und des Klemmrings 20 in Wirkverbindung. Dabei wird der Klemmring 20 elastisch deformiert, wobei er in reibschlüssiger Verbindung mit dem Stahlring 16 bzw. dem Gehäuse 11 gelangt. Dadurch wird ein vom Abtriebselement 50 eingeleitetes Drehmoment blockiert bzw. in das Gehäuse 11 eingeleitet, ohne dass sich das Antriebselement 60 dreht. Zum Ausgleich der Durchmesserverringerung des Klemmrings 20 im Bereich der Fortsätze 51 bis 54 erfolgt eine (geringe) Aufweitung des Klemmrings 20 im Bereich der Ausnehmungen 32, was durch Radialspalte 70 zwischen dem Klemmring 20 und den Mitnehmern 59 ermöglicht wird. Durch den Stahlring 56 wird gleichzeitig verhindert, dass die Fortsätze 51 bis 54 des Abtriebselements 50 infolge einer Reaktionskraft des Klemmrings 20 radial nach außen deformiert werden.

In der Fig. 4 ist eine gegenüber der Fig. 3 abgewandelte Ausführungsform dargestellt, bei der der Fortsatz 54a eine durchgehende Klemmfläche 69 aufweist, d.h., dass kein Steg 57 entsprechend der Fig. 3 vorhanden ist.

In der Fig. 7 ist eine Lastdrehmomentsperre 10a dargestellt, die sich gegenüber der Lastdrehmomentsperre 10 in der Verwendung von acht Mitnehmern 59a auszeichnet, die allesamt in gleichmäßigen Winkelabständen zueinander angeordnet sind. Weiterhin erkennt man, dass die Klemmflächenbereiche bzw. deren Klemmflächen jeweils gleich ausgebildet sind.

Die soweit beschriebenen Lastdrehmomentsperren 10, 10a können in vielfältiger Art und Weise abgewandelt bzw. modifiziert werden, ohne vom Erfindungsgedanken abzuweichen. Insbesondere sind auch noch andere Arten bzw. Formen von Klemmflächen denkbar. Erfindungswesentlich ist lediglich die Verwendung eines elastisch deformierbaren Klemmrings 20, der beim Einleiten eines abtriebsseitigen Drehmoments in reibschlüssiger Wirkverbindung mit einem ortsfesten Element, insbesondere einem Gehäuse 11, gelangt sowie die Verwendung mehrerer Mitnehmern 59, 59a.

## Patentansprüche

1. Lastdrehmomentsperre (10; 10a) für eine Getriebe-Antriebseinheit (100), umfassend ein zum Sperren eines von einem Abtriebselement (50) an ein Antriebselement (60) übertragenen Drehmoments mit einem ortsfesten Element (11) reibschlüssig zusammenwirkenden Bremskörper (18), der in einer Stellung zum Weitergeben eines Antriebsdrehmoments von dem Antriebselement (60) an das Abtriebselement (50) von Mitnehmern (59; 59a) des Antriebselements (60) gedreht wird, wobei das Antriebselement (60), das Abtriebselement (50) und der Bremskörper (18) konzentrisch zueinander um eine gemeinsame Drehachse (13) angeordnet sind, wobei der Bremskörper (18) elastisch radial deformierbar ausgebildet ist, wobei der Bremskörper (18) als Klemmring (20) ausgebildet ist, und wobei ein erster Klemmflächenbereich (25) des Klemmrings (20) beim Einleiten eines abtriebsseitigen Drehmoments des Abtriebselements (50) **durch die radiale Verformung des Klemmrings (20) direkt** mit einem zweiten Klemmflächenbereich (37) am Abtriebselement (50) in Wirkverbindung gelangt und den Klemmring (20) deformiert, so dass dieser bereichsweise in reibschlüssigen Kontakt mit dem ortsfesten Element (11) gelangt,
**dadurch gekennzeichnet,**
**dass** die ersten und zweiten Kontaktflächenbereiche (25, 37) des **Klemmrings (20)** und des Abtriebselements (50) ebene Klemmflächen (26 bis 29, 31, 38 bis 41, 45) aufweisen.

2. Lastdrehmomentsperre nach Anspruch 1,
**dadurch gekennzeichnet,**
**dass** die ebenen Klemmflächen des Klemmrings (20) und des Abtriebselements (50) jeweils aus wenigstens zwei Klemmflächen (26 bis 29, 38 bis 41) bestehen, die in einem Winkel zueinander angeordnet sind, so dass sie eine konkave oder konvexe Anordnung ausbilden.

3. Lastdrehmomentsperre (10; 10a) für eine Getriebe-Antriebseinheit (100), umfassend ein zum Sperren eines von einem Abtriebselement (50) an ein Antriebselement (60) übertragenen Drehmoments mit einem ortsfesten Element (11) reibschlüssig zusammenwirkenden Bremskörper (18), der in einer Stellung zum Weitergeben eines Antriebsdrehmoments von dem Antriebselement (60) an das Abtriebselement (50) von Mitnehmern (59; 59a) des Antriebselements (60) gedreht wird, wobei das Antriebselement (60), das Abtriebselement (50) und der Bremskörper (18) konzentrisch zueinander um eine gemeinsame Drehachse (13) angeordnet sind, wobei der Bremskörper (18) elastisch deformierbar ausgebildet ist, wobei der Bremskörper (18) als Klemmring (20) ausgebildet ist, und wobei ein erster Klemmflächenbereich (25) des Klemmrings (20) beim Einleiten eines abtriebsseitigen Drehmoments des Abtriebselements (50) mit einem zweiten Klemmflächenbereich (37) am Abtriebselement (50) in Wirkverbindung gelangt und den Klemmring (20) deformiert, so dass dieser bereichsweise in reibschlüssigen Kontakt mit dem ortsfesten Element (11) gelangt,
**dadurch gekennzeichnet,**
**dass** die ersten und zweiten Kontaktflächenbereiche (25, 37) linienförmige Klemmflächen (35, 36, 43, 44) **ausbilden, wobei die zweiten Klemmflächenbereiche (35, 36, 43, 44) eines Fortsatzes des Abtriebselements (50) gewölbte Klemmflächen (43, 44) aufweisen**, und dass der Klemmring (20) eine nutartige Ausnehmung (32) aufweist, in der ein als Steg (57) ausgebildeter Überlaufschutz des Abtriebselements (50) angeordnet ist, wobei die Ausnehmung (32) seitlich von zwei Erhebungen (33, 34) begrenzt ist, die gleichzeitig die linienförmigen Klemmflächen (35, 36) ausbilden.

4. Lastdrehmomentsperre nach Anspruch 1 oder 3,
**dadurch gekennzeichnet,**
**dass** mehrere, vorzugsweise wenigstens drei, in gleichmäßigen Winkelabständen zueinander angeordnete Mitnehmer (59; 59a) am Antriebselement (60) vorgesehen sind, die mit Fortsätzen (51 bis 54; 54a) des Abtriebselements (50) zusammenwirken, und dass zwischen dem Klemmring (20) und den Mitnehmern (59; 59a) ein Radialspalt (70) ausgebildet ist.

5. Lastdrehmomentsperre nach einem der Ansprüche 1 bis 4,
**dadurch gekennzeichnet,**
**dass** zwischen dem ortsfesten Element (11) und dem Klemmring (20) eine reibschlüssige Verbindung ausgebildet ist.

6. Lastdrehmomentsperre nach Anspruch 5,
**dadurch gekennzeichnet,**
**dass** die reibschlüssige Verbindung mittels eines O-Rings (21) erfolgt.

7. Lastdrehmomentsperre nach einem der Ansprüche 1 bis 6,
**dadurch gekennzeichnet,**
**dass** zwischen dem ortsfesten Element (11) und dem Klemmring (20) ein verschleißfestes Element in Form eines metallischen Ringes (16) angeordnet ist, und dass der metallische Ring (16) mit dem ortsfesten Element (11) drehfest verbunden ist.

8. Lastdrehmomentsperre nach einem der Ansprüche 4 bis 7,
**dadurch gekennzeichnet,**
**dass** die Fortsätze (51 bis 54; 54a) des Abtriebselements (50) von einem metallischen Außenring (56) radial umfasst sind.

9. Aggregat mit einer Lastdrehmomentsperre (10) nach einem der Ansprüche 1 bis 8,
**dadurch gekennzeichnet,**
**dass** das Aggregat als Komfortantrieb in einem Kraftfahrzeug, insbesondere als Fensterheberantrieb, ausgebildet ist.

## Claims

1. Load torsional lock (10; 10a) for a gear drive unit (100) comprising a brake body (18) which interacts in a frictionally locking fashion with a positionally fixed element (11) in order to lock a torque which is transmitted from an output element (50) to a drive element (60) and is rotated by drivers (59; 59a) of the drive element (60) in a position for passing on a drive torque from the drive element (60) to the output element (50), wherein the drive element (60), the output element (50) and the brake body (18) are arranged concentrically with respect to one another about a common rotational axis (13), wherein the brake body (18) is embodied in an elastically radially deformable fashion, wherein the brake body (18) is embodied as a clamping ring (20), and wherein a first clamping face region (25) of the clamping ring (20) upon introduction of an output-side torque of the output element (50) enters directly into an operative connection with a second clamping face region (37) on the output element (50) as a result of the radial deformation of the clamping ring (20) and deforms the clamping ring (20), with the result that said clamping ring (20) moves in certain areas into frictionally locking contact with the positionally fixed element (11),
**characterized**
**in that** the first and the second contact face regions (25, 37) of the clamping ring (20) and of the output element (50) have planar clamping faces (26 to 29, 31, 38 to 41, 45).

2. Load torsional lock according to Claim 1,
**characterized**
**in that** the planar clamping faces of the clamping ring (20) and of the output element (50) are each composed of at least two clamping faces (26 to 29, 38 to 41) which are arranged at an angle to one another, with the result that they form a concave or convex arrangement.

3. Load torsional lock (10; 10a) for a gear drive unit (100) comprising a brake body (18) which interacts in a frictionally locking fashion with a positionally fixed element (11) in order to lock a torque which is transmitted from an output element (50) to a drive element (60) and is rotated by drivers (59; 59a) of the drive element (60) in a position for passing on a drive torque from the drive element (60) to the output element (50), wherein the drive element (60), the output element (50) and the brake body (18) are arranged concentrically with respect to one another about a common rotational axis (13), wherein the brake body (18) is embodied in an elastically deformable fashion, wherein the brake body (18) is embodied as a clamping ring (20), and wherein a first clamping face region (25) of the clamping ring (20) upon introduction of an output-side torque of the output element (50) enters into an operative connection with a second clamping face region (37) on the output element (50) and deforms the clamping ring (20), with the result that said clamping ring (20) moves in certain areas into frictionally locking contact with the positionally fixed element (11),
**characterized**
**in that** the first and second contact face regions (25, 37) form linear clamping faces (35, 36, 43, 44), wherein the second clamping face regions (35, 36, 43, 44) of a projection of the output element (50) have curved clamping faces (43, 44), and in that the clamping ring (20) has a groove-like recess (32) in which an overflow preventer, formed as a web (57), of the output element (50) is arranged, wherein the recess (32) is bounded laterally by two elevated portions (33, 34) which form at the same time the linear clamping faces (35, 36).

4. Load torsional lock according to Claim 1 or 3,
**characterized**
**in that** a plurality of, preferably at least three, drivers (59; 59a), which are arranged at uniform angular intervals from one another, are provided on the drive element (60) and interact with projections (51 to 54; 54a) of the output element (50), and in that a radial gap (70) is formed between the clamping ring (20) and the drivers (59; 59a).

5. Load torsional lock according to one of Claims 1 to 4,
**characterized**
**in that** a frictionally locking connection is formed between the positionally fixed element (11) and the clamping ring (20).

6. Load torsional lock according to Claim 5,
**characterized**
**in that** the frictionally locking connection is formed by means of an O ring (21).

7. Load torsional lock according to one of claims 1 to 6,
**characterized**
**in that** a wear-resistant element in the form of a metallic ring (16) is arranged between the positionally fixed element (11) and the clamping ring (20), and in that the metallic ring (16) is connected in a rotationally fixed fashion to the positionally fixed element (11).

8. Load torsional lock according to one of Claims 4 to 7,
**characterized**
**in that** the projections (51 to 54; 54a) of the output element (50) are surrounded radially by a metallic outer ring (56).

9. Assembly having a load torsional lock (10) according to one of Claims 1 to 8,
**characterized**
**in that** the assembly is embodied as a comfort drive in a motor vehicle, in particular as a window lifter drive.

## Revendications

1. Système de blocage de couple de charge (10 ; 10a) pour une unité d'entraînement en entrée d'engrenage (100), comprenant un corps de freinage (18) interagissant par complémentarité de frottements avec un élément (11) fixe sur place pour bloquer un couple de rotation transmis par un élément d'entraînement en sortie (50) au niveau d'un élément d'entraînement en entrée (60), ledit corps étant tourné, dans une position de transmission d'un couple de rotation d'entraînement en entrée, de l'élément d'entraînement en entrée (60) à l'élément d'entraînement en sortie (50) à partir de doigts d'entraînement (59 ; 59a) de l'élément d'entraînement en entrée (60), l'élément d'entraînement en entrée (60), l'élément d'entraînement en sortie (50) et le corps de freinage (18) étant disposés concentriquement les uns par rapport aux autres autour d'un axe de rotation (13) commun, le corps de freinage (18) étant réalisé de façon à pouvoir être déformé de façon élastique dans le plan radial, le corps de freinage (18) étant réalisé sous la forme d'une bague de serrage (20) et une première zone de surface de serrage (25) de la bague de serrage (20) arrivant directement en liaison active avec une deuxième zone de surface de serrage (37), au niveau de l'élément d'entraînement en sortie (50), lors de l'introduction d'un couple de rotation, du côté d'entraînement en sortie, de l'élément d'entraînement en sortie (50) par la déformation radiale de la bague de serrage (20), et déformant la bague de serrage (20), de sorte que celle-ci arrive en partie en contact réalisé par complémentarité de frottements avec l'élément (11) fixe sur place, **caractérisé en ce que** les première et deuxième zones superficielles de contact (25, 37) de la bague de serrage (20) et de l'élément d'entraînement en sortie (50) comportent des surfaces de serrage (26 à 29, 31, 38 à 41, 45) planes.

2. Système de blocage de couple de charge selon la revendication 1, **caractérisé en ce que** les surfaces de serrage planes de la bague de serrage (20) et de l'élément d'entraînement en sortie (50) se composent respectivement d'au moins deux surfaces de serrage (26 à 29, 38 à 41) disposées selon un certain angle l'une par rapport à l'autre, de façon à former un agencement concave ou convexe.

3. Système de blocage de couple de charge (10 ; 10a) pour une unité d'entraînement en entrée d'engrenage (100), comprenant un corps de freinage (18) interagissant par complémentarité de frottements avec un élément (11) fixe sur place pour bloquer un couple de rotation transmis par un élément d'entraînement en sortie (50) au niveau d'un élément d'entraînement en entrée (60), ledit corps étant pivoté, dans une position de transmission d'un couple de rotation d'entraînement en entrée, par l'élément d'entraînement en entrée (60) au niveau de l'élément d'entraînement en sortie (50) par les doigts d'entraînement (59 ; 59a) de l'élément d'entraînement en entrée (60), l'élément d'entraînement en entrée (60), l'élément d'entraînement en sortie (50) et le corps de freinage (18) étant disposés concentriquement les uns par rapport aux autres autour d'un axe de rotation (13) commun, le corps de freinage (18) étant réalisé de façon à pouvoir être déformé de façon élastique, le corps de freinage (18) étant réalisé sous la forme d'une bague de serrage (20) et une première zone de surface de serrage (25) de la bague de serrage (20) arrivant en liaison active avec une deuxième zone de surface de serrage (37) au niveau de l'élément d'entraînement en sortie (50) lors de l'introduction d'un couple de rotation, du côté d'entraînement en sortie, de l'élément d'entraînement en sortie (50) et déformant la bague de serrage (20), de sorte que celle-ci arrive en partie en contact réalisé par complémentarité de frottements avec l'élément (11) fixe sur place, **caractérisé en ce que** les première et deuxième zones superficielles de contact (25, 37) forment des surfaces de serrage (35, 36, 43, 44) en forme de ligne, les deuxièmes zones superficielles de serrage (35, 36, 43, 44) d'un prolongement de l'élément d'entraînement en sortie (50) comportant des surfaces de serrage (43, 44) bombées et que la bague de serrage (20) comporte un évidement (32) de type encoche dans lequel une protection anti débordement, réalisée sous la forme d'un étai (57), de l'élément d'entraînement en sortie (50) est disposée, l'évidement (32) étant délimité en côté par deux éminences (33, 34) formant simultanément les surfaces de serrage (35, 36) en forme de ligne.

4. Système de blocage de couple de charge selon la revendication 1 ou 3, **caractérisé en ce que** plusieurs, de préférence au moins trois, doigts d'entraînement (59 ; 59a) disposés à des distances angulaires constantes les uns par rapport aux autres, sont prévus au niveau de l'élément d'entraînement en entrée (60), lesdits doigtés interagissant avec des prolongements (51 à 54 ; 54a) de l'élément d'entraînement en sortie (50) et qu'une fente radiale (70) est réalisée entre la bague de serrage (20) et les doigts d'entraînement (59 ; 59a).

5. Système de blocage de couple de charge selon l'une quelconque des revendications 1 à 4, **caractérisé en ce qu'**une liaison réalisée par complémentarité de frottements est réalisée entre l'élément (11) fixe sur place et la bague de serrage (20).

6. Système de blocage de couple de charge selon la revendication 5, **caractérisé en ce que** la liaison réalisée par complémentarité de frottements se produit à l'aide d'un joint torique (21).

7. Système de blocage de couple de charge selon l'une quelconque des revendications 1 à 6, **caractérisé en ce qu'**un élément résistant à l'usure sous la forme d'une bague (16) métallique est disposé entre l'élément (11) fixe sur place et la bague de serrage (20) et que la bague métallique (16) est reliée solidairement en rotation à l'élément (11) fixe sur place.

8. Système de blocage de couple de charge selon l'une quelconque des revendications 4 à 7, **caractérisé en ce que** les prolongements (51 à 54 ; 54a) de l'élément d'entraînement en sortie (50) sont englobés dans le plan radial par une bague extérieure (56) métallique.

9. Agrégat avec un système de blocage de couple de charge (10) selon l'une quelconque des revendications 1 à 8, **caractérisé en ce que** l'agrégat est réalisé sous la forme d'un entraînement en entrée de confort dans un véhicule automobile, notamment d'un entraînement en entrée de lève-vitre.
